# EUROPÄISCHE PATENTANMELDUNG

(11) **EP 0 865 819 A1**
(43) Veröffentlichungstag der Anmeldung: **23.09.1998**
(21) Anmeldenummer: 98104235.1
(22) Anmeldetag: 10.03.1998
(51) Int. Cl.: B01J 13/12

(54) **Verfahren zum Mikroverkapseln von Partikeln**

(30) Priorität: 19.03.1997 DE 19711393
(71) Anmelder: FRAUNHOFER-GESELLSCHAFT ZUR FÖRDERUNG DER ANGEWANDTEN FORSCHUNG E.V., 80636 München (DE)
(72) Erfinder: Niehaus, Michael Dipl.-Chem., 76327 Pfinztal (DE); Krause, Horst Dr., 76327 Pfinztal (DE); Teipel, Ulrich Dipl.-Ing., 76327 Pfinztal (DE)
(74) Vertreter: Lichti, Heiner, Dipl.-Ing.

(57) **Zusammenfassung**

Zum Mikroverkapseln von Substraten in Partikelform, insbesondere < 100 µm, in einer Wirbelschicht wird das in einem überkritischen Fluid gelöste Kapselmaterial in feinen Tropfen bzw. Partikeln in die gegebenenfalls unter überkritischen Bedingungen gehaltene Wirbelschicht der Partikel eingedüst. Es entstehen keine Agglomerationen. Die Schichtdicke liegt zwischen kleiner 1 µm bis zu wenigen µm.

## Beschreibung

Die Erfindung betrifft ein Verfahren zum Mikroverkapseln von Substraten in Partikelform, insbesondere < 100µm, in einer Wirbelschicht, indem das in einem Lösungsmittel gelöste Kapselwandmaterial in feinen Tropfen oder Partikeln in die das partikelförmige Substrat enthaltende Wirbelschicht eingedüst wird.

Beschichtete Partikel werden bei einer Vielzahl von Produkten, z.B. Pharmazeutika, Düngemittel, Treib- und Explosivstoffen und dergleichen eingesetzt. Eine solche Beschichtung (Coating) wird auch als Mikroverkapselung bezeichnet.

Die Beschichtung erfüllt je nach Substanz unterschiedliche Zwecke. Bei Pharmazeutika und auch Düngemitteln wird durch die Beschichtung eine verzögerte Freisetzung (Retardierung) des Partikelmaterials erreicht. In der chemischen Verfahrenstechnik werden Substrate mit einem Katalysatormaterial verkapselt, um gegenüber der Verwendung des reinen Katalysators große Oberflächen bei verringertem Einsatz an Katalysatormaterial bereitzustellen. Umgekehrt werden auch teure, katalytisch aktive Substanzen durch Mikroverkapselung mit einem inerten Material immobilisiert.

In allen Fällen ist eine gute Haftung des Kapselwandmaterials auf dem Substrat erwünscht. In vielen Fällen müssen zusätzlich Haftvermittler eingesetzt werden, um die gewünschten mechanischen Eigenschaften zwischen Substrat und Kapselwandmaterial zu erhalten. Konventionelle Verfahren der Beschichtung arbeiten mit einem Wirbelschichtreaktor, der mit einer Düse ausgestattet ist. Hierbei wird das in einem herkömmlichen Lösungsmittel, z.B. Ether, Tetrahydrofuran oder auch Wasser, gelöste Beschichtungsmaterial in die aus den Substrat-Partikeln gebildete Wirbelschicht eingedüst. Die Partikel werden von den Tröpfchen der eingedüsten Lösung benetzt. Sind die Partikel sehr klein, kann es in der Wirbelschicht aufgrund der eingedüsten Tröpfchen zu Agglomerationen kommen. Die Agglomerate sinken aus der Wirbelschicht ab, so daß diese gestört wird oder gar zusammenbricht. Dies geschieht insbesondere dann, wenn sich überzählige Tröpfchen in der Wirbelschicht befinden oder das Lösungsmittel zu langsam verdampft. Auch läßt sich die Schichtdicke nur unzulänglich steuern, insbesondere nicht minimieren.

Der Erfindung liegt die Aufgabe zugrunde, Partikeln in einer Wirbelschicht einwandfrei und mit geringer Schichtdicke zu beschichten.

Diese Aufgabe wird erfindungsgemäß dadurch gelöst, daß als Lösungsmittel ein überkritisches Fluid verwendet wird.

Die Verwendung überkritischer Lösungsmittel ist zwar bei der Herstellung dünner Flächenbeschichtungen (Ind. Eng. Chem. Res. 1987, 26, 2298-2306) und bei anderen Verfahren zur Mikroverkapselung bekannt (EP 0 706 821 A1), hat jedoch bisher keinen Eingang in die Partikelbeschichtung in einem Wirbelbett gefunden. Die erfindungsgemäße Verwendung eines überkritischen Fluids als Lösungsmittel ermöglicht es, Partikel mit einer Schichtdicke <1 µm bis zu einigen µm zu verkapseln. Dabei kommt es insbesondere nicht zu unliebsamen Agglomerationen im Wirbelbett, was auf die gegenüber herkömmlichen Lösungsmitteln geringeren Kohhäsions- und Adhäsionskräfte (Kapillarkräfte) des überkritischen Fluids zurückzuführen sein dürfte. Selbst bei Partikeln kleiner 100µm werden solche Agglomerationen nicht beobachtet.

Vorzugsweise wird die Lösung aus dem Kapselwandmaterial und dem überkritischen Fluid in das unter überkritischen Bedingungen gehaltene Wirbelbett eingedüst.

Als überkritisches Fluid hat sich insbesondere überkritisches Kohlendioxid aufgrund seiner preiswerten Verfügbarkeit erwiesen. Der weitere Vorteil liegt darin, daß sich auch solche Substrate, die gegenüber herkömmlichen organischen Lösungsmitteln empfindlich sind, verarbeiten lassen. Weiterhin ist von großem Vorteil, daß sich auf diese Weise lösungsmittelfreie Substanzen herstellen lassen, wie dies beispielsweise bei Pharmazeutika oder auch Explosivstoffen gewünscht und gefordert wird. Das erfindungsgemäße Verfahren hinterläßt keine Lösungsmittelrückstände auf dem Substrat und es entfallen die im Fertigungsprozeß bei organischen Lösungsmitteln notwendigen sicherheits- und umwelttechnischen Vorkehrungen.

Bei Verwendung von überkritischem Kohlendioxid wird das Kapselwandmaterial beispielsweise bei einem Druck von 150 bis 200 bar und einer Temperatur von 70 bis 100°C gelöst und wird die Wirbelschicht unter einem Druck und einer Temperatur in den vorgenannten Grenzen gehalten.

Es ist weiterhin vorzugsweise vorgesehen, daß die Lösung in Tropfen oder Partikeln mit einem Durchmesser eingedüst wird, der wesentlich kleiner als der Durchmesser der Substratpartikel ist. Aufgrund der Verwendung eines überkritischen Fluids kann die Tropfen- bzw. Partikelgröße bis in den Bereich von 0,01 µm und darunter reduziert werden, wodurch sich ein sehr günstiger Abscheidegrad ergibt.

### Beispiel 1

Quarzpartikel mit einem mittleren Durchmesser von 40 µm werden in einem Wirbelschichtreaktor mikroverkapselt. Das als Lösungsmittel eingesetzte überkritische Kohlendioxid wird bei Drücken von 150 bis 200 bar und Temperaturen von 70 bis 150°C in einem Autoklaven mit Stearvlstearat beladen und anschließend über Diamantdüsen mit einem Durchmesser von 25 bis 150 µm in die Wirbelschicht eingedüst.

Am Endprodukt konnte keine Änderung der Korngrößenverteilung festgestellt werden. Es sind somit keine Agglomerationen eingetreten. Die mittlere Schichtdicke der Mikroverkapselung beträgt 3 µm.

### Beispiel 2

Entsprechend Beispiel 1 wurden Hexogen-Partikel mit einem mittleren Durchmesser von 25 µm mit PETN (Pentaerythrittetranitrat) und TNT (Trinitrotuol) in überkritischem Kohlendioxid beschichtet. Die Schichtdicke betrug zwischen 0,3 und 7 µm.

## Patentansprüche

1. Verfahren zum Mikroverkapseln von Substraten in Partikelform in einer Wirbelschicht, indem das in einem Lösungsmittel gelöste Kapselwandmaterial in feinen Tropfen oder Partikeln in die das partikelförmige Substrat enthaltende Wirbelschicht eingedüst wird, dadurch gekennzeichnet, daß als Lösungsmittel ein überkritisches Fluid verwendet wird.

2. Verfahren nach Anspruch 1 zur Herstellung von mikroverkapselten Partikeln <100µm.

3. Verfahren nach Anspruch 1 oder 2, dadurch gekennzeichnet, daß die Lösung aus dem Kapselwandmaterial und dem überkritischen Fluid in die unter überkritischen Bedingungen gehaltene Wirbelschicht eingedüst wird.

4. Verfahren nach einem der Ansprüche 1 bis 3, dadurch gekennzeichnet, daß als überkritisches Fluid überkritisches Kohlendioxid verwendet wird.

5. Verfahren nach einem der Ansprüche 1 bis 4, dadurch gekennzeichnet, daß das Kapselwandmaterial in dem überkritischen Kohlendioxid bei einem Druck von 150 bis 200 bar und einer Temperatur von 70 bis 100°C gelöst und die Wirbelschicht unter einem Druck und einer Temperatur in den vorgenannten Grenzen gehalten wird.

6. Verfahren nach einem der Ansprüche 1 bis 5, dadurch gekennzeichnet, daß die Lösung in Tröpfchen oder Partikeln mit einem Durchmesser eingedüst wird, der wesentlich kleiner als der Durchmesser der Substratpartikel ist.

7. Verfahren nach Anspruch 6, dadurch gekennzeichnet, daß die Lösung in Tröpfchen oder Partikeln mit einem Durchmesser im Bereich von 0,01 µm eingedüst wird.

8. Verfahren nach einem der Ansprüche 1 bis 7 zur Mikroverkapselung von Partikeln, die gegenüber herkömmlichen Lösungsmitteln empfindlich sind.
